# EUROPÄISCHE PATENTANMELDUNG

(11) **EP 1 113 176 A2**
(43) Veröffentlichungstag der Anmeldung: **04.07.2001**
(21) Anmeldenummer: 00127329.1
(22) Anmeldetag: 13.12.2000
(51) Int. Cl.: F04C 27/00, F04C 18/12

(54) **Vakuumpumpe mit Wellendichtmitteln**

(30) Priorität: 27.12.1999 DE 19963170
(71) Anmelder: Leybold Vakuum GmbH, 50968 Köln (DE)
(72) Erfinder: Kriehn, Hartmut, 50997 Köln (DE); Brenner, Lothar, 53502 Bad Münstereifel (DE)
(74) Vertreter: Leineweber, Jürgen, Dipl.-Phys.

(57) **Zusammenfassung**

Vakuumpumpe (1) mit einer Antriebswelle (2) für einen Rotor, mit einem Schöpfraum, in dem sich der Rotor befindet, mit einem Lagerraum und mit Wellendichtmitteln (7) zwischen dem Schöpfraum und dem Lagerraum;um die Funktion der Dichtmittel zu verbessern, wird vorgeschlagen, dass Bestandteil der Wellendichtmittel (7) eine Gleitringdichtung (11; 12, 13, 14) ist, dass ein lagerseitiger Raum (21) im Bereich der Gleitringdichtung (11) vorgesehen ist, dass der Raum (21) Bestandteil eines Kühl-/Schmiermittelkreislaufs ist und dass die Welle (2) Bohrungen (28, 29) aufweist, durch die das den Kreislauf durchströmende Kühl-/Schmiermittel geführt wird.

## Beschreibung

Die Erfindung bezieht sich auf eine Vakuumpumpe mit einer Antriebswelle für einen Rotor, mit einem Schöpfraum, in dem sich der Rotor befindet, mit einem Lagerraum und mit Wellendichtmitteln zwischen dem Schöpfraum und dem Lagerraum.

Um ein möglichst kohlenwasserstofffreies Vakuum zu erzeugen, ist es bekannt, "trockene" Vakuumpumpen einzusetzen. Besonders geeignet dazu sind Zweiwellenvakuumpumpen. Dazu gehören neben Roots- und Klauenvakuumpumpen auch Schraubenvakuumpumpen, wie sie z.B. aus der DE-A-197 45 615 bekannt sind. Einwellenvakuumpumpen (z.B. Drehschieberpumpen) werden inzwischen ebenfalls so ausgebildet, dass sie "trocken" betrieben werden können.

Bei Vakuumpumpen dieser Art ist eine einwandfreie Funktion der Dichtmittel, die sich zwischen dem ölfreien Schöpfraum und dem schmiermittelversorgten Lagerraum befinden, nicht immer sichergestellt. Sie ist häufig von der Drehzahl, von der Menge und/oder von der Viskosität eines Schmiermittels abhängig.

Der vorliegenden Erfindung liegt die Aufgabe zugrunde, die Wellendichtmittel einer Vakuumpumpe der eingangs erwähnten Art so zu gestalten, dass sie die Nachteile der vorbekannten Lösungen nicht haben.

Erfindungsgemäß wird diese Aufgabe durch die kennzeichnenden Merkmale der Patentansprüche gelöst.

Die Gleitringdichtung verhindert wirksam das Eindringen von Prozessmedium in den Lagerraum. Das Prozessmedium kann gasförmig oder flüssig sein. Die Funktion der Gleitringdichtung erfordert die gezielte Zuführung von Kühl-/Schmiermittel.

Ein weiterer wesentlicher Vorteil der erfindungsgemäßen Dichtmittel liegt darin, dass sie im wesentlichen drehzahlunabhängig sind. Wenn das aus dem lagerseitigen Raum der Gleitringdichtung ausströmende Öl durch Radialbohrungen in das Innere der Welle geführt wird, baut sich infolge der auf das Öl wirkenden Zentifugalkräfte bereits bei geringen Wellendrehzahlen eine relativ hoher Öldruck auf. Der von einer Gleitringdichtung benötigte Sperrdruck ist deshalb bereits bei geringen Wellendrehzahlen ausreichend hoch.

Für den Fall, dass das Kühl-/Schmiermittel in umgekehrter Richtung strömt, muss auf seinem Weg zurück zum Ölsumpf eine Drossel, vorzugsweise ein federbelastetes Rückschlagventil, vorhanden sein, das den notwendigen Druckaufbau im lagerseitigen Raum der Gleitringdichtung sicherstellt.

Weiterhin werden nicht nur die weitgehende Drehzahlunabhängigkeit sondern auch eine Unabhängigkeit von der Menge und von der Viskosität des umströmenden Öls erreicht; der relativ hohe Öldruck sichert darüberhinaus eine ausreichende Schmierung der Gleitringdichtung; Reibungswärme wird abgeführt. Schließlich hat die erfindungsgemäße Lösung den Vorteil, dass sie lageunabhängig ist, d.h. sie kann bei allen hier betroffenen Maschinen eingesetzt werden, unabhängig davon, ob die Wellen horizontal oder vertikal angeordnet sind.

Ein weiterer wesentlicher Vorteil der Erfindung besteht darin, dass das durch das Welleninnere z.B. zu einem Ölsumpf zurückstömende Öl auch zur gezielten Kühlung der Welle verwendet werden kann. Diese ist dazu zweckmäßig mit einem Rohreinbau ausgerüstet, mit dessen Hilfe das Öl in thermisch kritische Bereiche geführt wird.

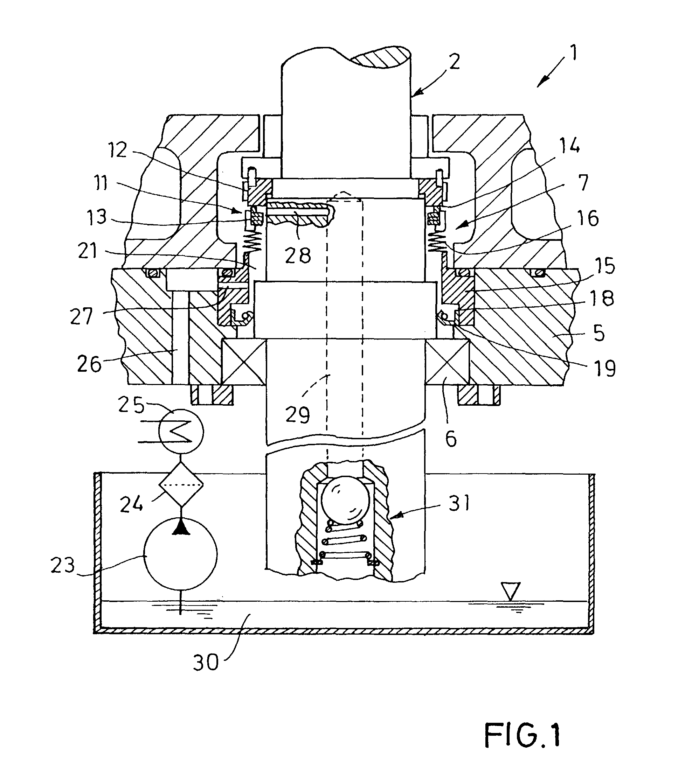

Weitere Vorteile und Einzelheiten der Erfindung sollen anhand von in den Figuren 1 bis 3 schematisch dargestellten Ausführungsbeispielen erläutert werden.

Die Figuren zeigen Teilschnitte durch Ausführungsbeispiele für Vakuumpumpen der hier betroffenen Art, und zwar in Höhe der erfindungsgemäßen Dichtmittel.

Bei den in den Figuren dargestellten Ausführungsbeispielen handelt es sich um Vakuumpumpen 1 mit einer oder zwei vertikal angeordneten Wellen 2, die jeweils einen nicht dargestellten Rotor tragen. Der oder die Rotoren bilden zusammen mit dem ebenfalls nicht dargestellten Gehäuse der Pumpe 1 den Schöpfraum.

Der Lagerung der Wellen 2 dienen vorzugsweise jeweils zwei Lagerscheiben mit darin eingelassenen Lagern. Nur eine rotorseitige Lagerscheibe 5 und ein rotorseitiges Lager 6 sind dargestellt. Zwischen der rotorseitigen Lagerscheibe 5 und der nicht dargestellten weiteren Lagerscheibe befindet sich häufig ein Antriebsmotor. Die allgemein mit 7 bezeichneten Wellendichtmittel befinden sich in Höhe der Lagerscheibe 5 und haben die Aufgabe, den Schöpfraum vom Lager-/Motorraum zu trennen.

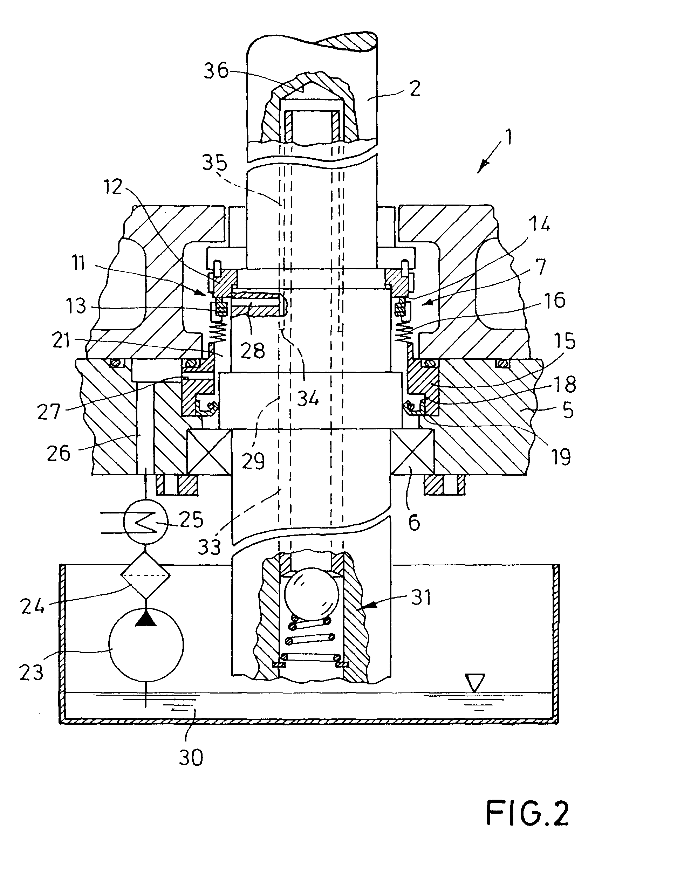

Der oder die Rotoren können fliegend gelagert sein. In diesem Fall befindet sich auf der in den Figuren 1 und 2 dargestellten Lagerseite das weitere Wellenlager. Ist die Welle bzw. sind die Wellen 2 beidseitig gelagert, können sich auf beiden Seiten der Welle(n) bzw. des Schöpfraumes die erfindungsgemäßen Dichtmittel befinden.

Die Wellendichtmittel 7 umfassen eine Gleitringdichtung 11, die ihrerseits aus dem von der Welle 2 getragenen, rotierenden Ring 12 und dem die Welle 2 umfassenden, stationären Ring 13 besteht. Die Ringe 12 und 13 berühren einander im Bereich der Gleitfläche 14.

Träger des stationären Ringes 13 ist ein die Welle 2 umfassendes federndes Teil (hier als Balg 16 dargestellt), mit dessen Hilfe der notwendige Anpressdruck im Bereich der Gleitfläche 14 erzeugt wird. Der Balg 16 stützt sich seinerseits auf einem in die Lagerscheibe 5 eingelassenen Passring 15 ab.

Der Passring 15 ist mit einer inneren Eindrehung 18 ausgerüstet, die eine Nebendichtung, hier den Wellendichtring 19, aufnimmt. Dadurch entsteht lagerseitig ein abgeschlossener Raum 21, der von der Welle 2, den Ringen 13 und 14 der Gleitringdichtung 11, dem Balg 16, dem Passring 15 und dem Wellendichtring 19 gebildet wird. Die Gleitringdichtung 11, insbesondere der stationäre Ring 13, ist durch entsprechende Gestaltung seines Profils und seiner Befestigungslinie am Balg 16 so ausgebildet, dass sich bei einer Zunahme des Druckes im Raum 21 die Anpresskraft im Bereich der Gleitfläche 14 erhöht. Die offene Seite des Wellendichtringes 19 ist dem Raum 21 zugewandt.

Der Raum 21 ist Bestandteil eines Ölkreislaufs, der die Ölpumpe 23, den Filter 24 und den Kühler 25 umfasst. Das geförderte Öl gelangt über Bohrungen 26 bzw. 27 in der Lagerscheibe 5 und im Passring 15 in den Raum 21. Der Abführung des Öls aus dem Raum 21 dienen Bohrungen 28 und 29 in der Welle 2. Bei den Bohrungen 28 handelt es sich um - vorzugsweise mehrere - Radialbohrungen, deren äußere Öffnungen sich in Höhe der Gleitfläche 14 befinden. Die inneren Öffnungen der Bohrungen 28 münden in eine zentrale, zum Lagerraum hin offene Sackbohrung 29 in der Welle 2. Das aus der unteren Öffnung der Sackbohrung 29 austretende Öl gelangt in einen Ölsumpf 30, der sich unterhalb des unteren Endes der Welle 2 befindet. Die Ölpumpe 23 schöpft das von ihr geförderte Öl aus diesem Ölsumpf.

Dadurch, dass sich die Bohrungen 28 in Höhe der Gleitfläche 14 der Gleitringdichtung befinden, wird verhindert, dass sich in diesem Bereich ein Luftpolster ausbildet. Eine sichere Schmierung der Gleitfläche 14 ist gewährleistet. Durch das die Bohrungen 28, 29 in der Welle 2 durchströmende Öl wird die Welle gekühlt.

Der Druckaufbau im Raum 21 kann durch ein federbelastetes Rücklagventil 31 unterstützt werden, das sich in der Abströmbohrung 29 in der Welle 2 befindet. Der Druckaufbau beruht auf der mengenunabhängigen Drosselwirkung des Ventils 31. Es hat die Funktion eines Druckbegrenzungsventils. Außerdem hat das Ventil 31 die Wirkung, dass die Bohrung 28 immer vollständig mit Öl gefüllt ist, wodurch die Kühlwirkung unterstützt wird.

Beim Ausführungsbeispiel nach Figur 1 endet die Sackbohrung 29 in Höhe der Radialbohrungen 28. Die Kühlwirkung des Öls erstreckt sich nur auf das lagerseitige Ende der Welle 2.

Beim Ausführungsbeispiel nach Figur 2 erstreckt sich die Sackbohrung 29 bis in den Bereich des Rotors bzw. Schöpfraumes. Um das Öl gezielt in diesen Bereich fördern zu können, befindet sich in der Sackbohrung ein Rohrabschnitt 33, dessen Außenfläche mit einer Stufe 34 versehen ist. Die Stufe 34 ist so gewählt, dass der Rohrabschnitt 33 mit der Innenfläche der Sackbohrung 29 einen Ringkanal 35 bildet, der sich von den Bohrungen 28 bis zum Grund 36 der Sackbohrung 29 erstreckt. Dadurch, dass der Rohrabschnitt 33 kurz vor dem Grund 36 der Sackbohrung 29 endet, besteht eine Verbindung des Ringkanals 35 mit dem Inneren des Rohrabschnittes 33, durch das das Öl abströmt. Auslassseitig ist das bereits beschriebene federbelastete Ventil 31 angeordnet.

Damit die Gleitringdichtung ihre Funktion erfüllen kann, muss der Druck auf der zu schützenden Seite immer höher als der Druck auf der anderen Seite sein. Das Anheben des Druckes bezeichnet man als "Sperren" der Dichtung. Bei der Erfindung wird der Sperrdruck zwischen der Gleitringdichtung und einer Nebendichtung erzeugt. Der Druck wird dabei durch die Arbeit der Fliehkräfte in radialen Bohrungen der sich drehenden Welle aufgebaut. Der Druck ist dabei von der Drehzahl der Welle abhängig und erfordert die Ölabführung durch die drehende Welle.

Der mindestens anliegende Sperrdruck kann durch den Einbau des Druckventils im Welleninneren bestimmt werden. Das heißt, auch bei nicht rotierender Welle (keine Arbeit der Fliehkräfte) existiert ein Sperrdruck entsprechend dem Öffnungsdruck des Ventils. Durch die Verwendung des Ventils und/oder durch die Arbeit der Fliehkräfte ist der Druck weitgehend unabhängig von der Öltemperatur und der strömenden Ölmenge.

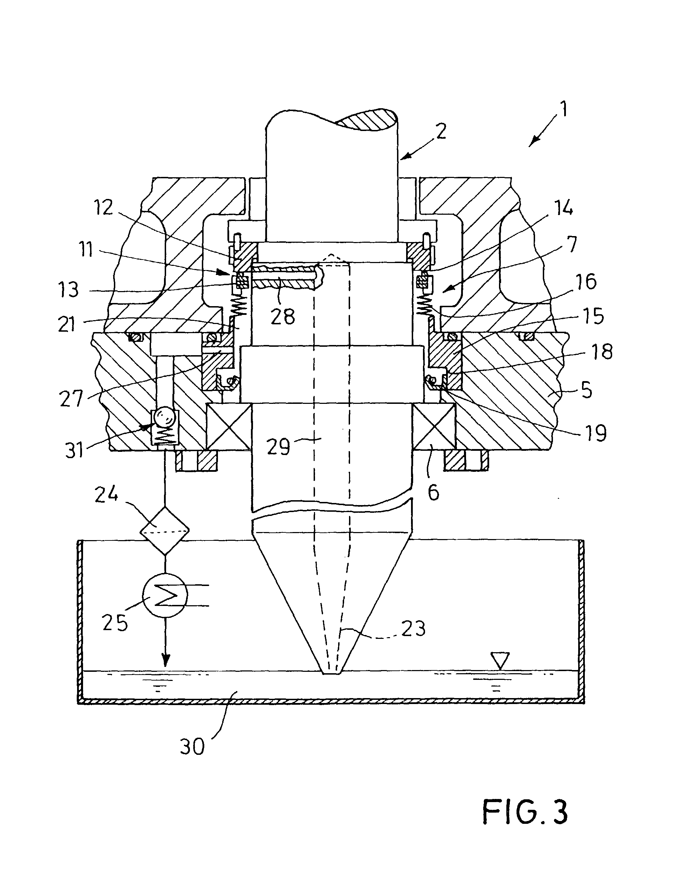

Figur 3 zeigt eine Ausführungsform, bei der das Kühl/Schmiermittel eine gegenüber der zu den Figuren 1 und 2 beschriebenen Strömung umgekehrte Strömungsrichtung hat. Dazu ist das untere Ende der Welle 2 als Pumpe 23, und zwar als an sich bekannte Zentrifugalpumpe, ausgebildet, die das Öl zu den Radialbohrungen 28 in der Welle 2 fördert. Die Förderwirkung entsteht dadurch, dass der untere Abschnitt der Sachbohrung 9 einen sich von unten nach oben konisch erweiternden Querschnitt hat. Von den Bohrungen 28 gelangt das Öl in den Raum 21, den es über die Bohrung 27 im Passring 15 wieder verlässt. Um den notwendigen Sperrdruck im Raum 21 zu erzeugen, befindet sich die Drossel bzw. das federbelastete Rückschlagventil 31 in der Lagerscheibe 5. An diese Bohrung schließen sich der Filter 24 und der Kühler 25 an, so dass das Öl gereinigt und gekühlt in den Ölsumpf 30 zurückströmt.

In den Figuren 1 bis 3 sind Ausführungen dargestellt, bei denen sich die Welle 2 vertikal erstreckt. Auch bei horizontaler Lage der Welle ist eine sichere Funktion gewährleistet. Es ist lediglich erforderlich, den Ölsumpf an einer anderen Stelle anzuordnen, wie es bereits in der DE-A-197 45 615 beschrieben ist.

## Patentansprüche

1. Vakuumpumpe (1) mit einer Antriebswelle (2) für einen Rotor, mit einem Schöpfraum, in dem sich der Rotor befindet, mit einem Lagerraum und mit Wellendichtmitteln (7) zwischen dem Schöpfraum und dem Lagerraum, dadurch gekennzeichnet, dass Bestandteil der Wellendichtmittel (7) eine Gleitringdichtung (11; 12, 13, 14) ist, dass ein lagerseitiger Raum (21) im Bereich der Gleitringdichtung (11) vorgesehen ist, dass der Raum (21) Bestandteil eines Kühl-/Schmiermittelkreislaufs ist und dass die Welle (2) Bohrungen (28, 29) aufweist, durch die das den Kreislauf durchströmende Kühl-/Schmiermittel geführt wird.

2. Pumpe nach Anspruch 1, dadurch gekennzeichnet, dass mehrere Radialbohrungen (28) vorgesehen sind, die in eine zur Lagerseite hin offene Sackbohrung (29) in der Welle (2) münden.

3. Pumpe nach Anspruch 2, dadurch gekennzeichnet, dass sich die Bohrungen (28) in Höhe der Gleitringdichtung (11), vorzugsweise in Höhe der Gleitfläche (14), befinden.

4. Pumpe nach Anspruch 2 oder 3, dadurch gekennzeichnet, dass sich die Sackbohrung (29) in der Welle (2) bis in den Bereich des Rotors/Schöpfraumes erstreckt.

5. Pumpe nach Anspruch 4, dadurch gekennzeichnet, dass die Sackbohrung (29) mit einem Rohreinbau (33) ausgerüstet ist, der der Führung des Öls bis zum Grund (36) der Sackbohrung (29) dient.

6. Pumpe nach einem der vorhergehenden Ansprüche, dadurch gekennzeichnet, dass der Raum (21) gebildet wird von der Gleitringdichtung (11) mit seinem rotierenden Ring (12), der mit der Welle (2) verbunden ist, von einem Balg (16), der den stationären Ring (13) der Gleitringdichtung (11) trägt, von einem in einer Lagerscheibe (5) eingelassenen Passring (15), auf den sich der Balg (16) abstützt sowie von einem Radialwellendichtring (19), der sich zwischen dem Passring (18) und der Welle (2) befindet.

7. Pumpe nach einem der vorhergehenden Ansprüche, dadurch gekennzeichnet, dass Bestandteile des Ölkreislaufs eine Ölpumpe (23) sowie ein Filter (24) und/oder ein Kühler (25) sind.

8. Pumpe nach einem der Ansprüche 1 bis 7, dadurch gekennzeichnet, dass das Kühl-/Schmiermittel den Kreislauf derart durchströmt, dass es die Radialbohrungen (28) in der Welle (2) von außen nach innen durchsetzt.

9. Pumpe nach Anspruch 8, dadurch gekennzeichnet, dass sich in der Sachbohrung (29), vorzugsweise im Bereich ihrer Abströmöffnung, ein Rückschlagventil (31) befindet.

10. Pumpe nach Anspruch 9, dadurch gekennzeichnet, dass als Drossel ein Rückschlagventil (31) vorgesehen ist.

11. Pumpe nach einem der Ansprüche 1 bis 7, dadurch gekennzeichnet, dass das Kühl-/Schmiermittel den Kreislauf derart durchströmt, dass es die Radialbohrungen (28) in der Welle (2) von innen nach außen durchsetzt.

12. Pumpe nach Anspruch 11, dadurch gekennzeichnet, dass sich in einer der Bohrungen (26, 27), die das Kühl-/Schmiermittel auf seinem Weg vom Raum (21) bis zum Ölsumpf (30) durchströmt, eine Drossel, vorzugsweise ein federbelastetes Rückschlagventil (31), befindet.

13. Pumpe nach Anspruch 12, dadurch gekennzeichnet, dass das Kühl-/Schmiermittel auf diesem Wege den Filter (24) und Kühler (25) durchströmt.

14. Pumpe nach Anspruch 11, 12 oder 13, dadurch gekennzeichnet, dass das dem Ölsumpf (30) zugewandte Ende der Welle (2) als Zentrifugalpumpe (23) ausgebildet ist.
